# EUROPEAN PATENT APPLICATION

(11) **EP 4 700 326 A1**
(43) Date of publication of application: **25.02.2026**
(21) Application number: 24306369.0
(22) Date of filing: 19.08.2024
(51) Int. Cl.: G01B 11/02, G01B 21/04

(54) **METHOD FOR MEASURING A DISTANCE SEPARATING A CAMERA FROM A USER**

(71) Applicant: Essilor International, 94220 Charenton-Le-Pont (FR)
(72) Inventor: BOUTINON, Stéphane, 75013 PARIS (FR); PINAULT, Philippe, 94130 NOGENT SUR MARNE (FR); SWITAL, Marion, 75013 PARIS (FR); CALEFF, Florian, 94140 ALFORTVILLE (FR); MOREAU, Martin, 75020 PARIS (FR)
(74) Representative: Plasseraud IP

(57) **Abstract**

The invention relates to a method for measuring a test distance (DT) separating a camera (CAM) from a user (1), comprising steps of:
- prompting the user to get in a first position,
- displaying a reference object,
- acquiring a first image comprising the reference object and at least one body of the user,
- detecting and measuring a calibration length from the reference and obtaining a calibration distance separating the camera and the reference object,
- detecting and measuring at least one first reference length relative to the at least one body part,
- prompting the user to get in a second position,
- acquiring a second image comprising the at least one body part,
- detecting and measuring at least one second reference length (PL') in the second image, and
- obtaining the test distance (DT).

## Description

### Field of the invention

The invention relates to a method for measuring a distance separating a camera from a user. The invention also relates to a computer program for implementing this method.

### Background of the invention

There are several existing methods for measuring a distance between a sensor and a reference object, requiring equipment of different complexities, and bringing various levels of accuracy for the measured distance.

There is also an interest in providing a method that can be implemented with a simple setup by an untrained user, preferably at home, with a camera and a computer or smartphone.

An example of application requiring accurate measurement of such a distance is the evaluation of the quality of vision of a user with an optotype, to determine if a corrective equipment is needed, and ways to implement such an evaluation at home with no specific equipment.

This application requires a sufficiently accurate measurement of the optical distance separating the user's eyes from the optotype, to get an accurate evaluation of the quality of vision at a specific distance.

The distance can then be determined using a reference object of known dimensions and a camera, for example a smartphone camera held close to the eyes.

The reference object can be a physical object of known dimensions, comprising reference points that can be easily detected in an image based on colorimetry for example. Alternatively, the reference object can be detected in the image manually, or through an algorithm, based on its shape, like a credit card or customer card.

The distance is determined based on the size of an image of a reference object of known dimensions taken by the camera, depending on a focal length of said camera.

More specifically, the ratio of dimensions of the real object and the image taken by the camera, after adjustment for pixel size, is equal to the ratio of the distance between the camera and the reference object to the focal length of the camera.

An improvement over such a method is disclosed in the application EP4098970, wherein the reference object is an image displayed on the screen of a smartphone held by the user facing a mirror, wherein the camera of said smartphone acquires an image comprising the reference object. Then, by measuring a reference length of the reference object in the image, the distance from the user to the mirror, and thus form the user to the mirror and back to the smartphone, can be determined with precision. This method provides an improved measurement, by compensating for the short focal distance of a smartphone, and the shape of the reference object disclosed therein reduced the consequences of blur in the image. However, a method of this type may be further improved.

Firstly, the method measures a distance extending from the smartphone to the mirror, and then back to the smartphone. Such a distance may be slightly different from the distance to the user's eyes if the smartphone is not placed exactly at eyes level. This is further complicated if the user inadvertently moves during the measurement.

Additionally, while this method provides excellent results for near-field vision testing, that is measuring with precision a distance under 1 meter, difficulties may arise when attempting to measure a distance representative of far-field vision, for example over 5 meters. In this case, the reflection in the mirror may be blurry and/or obscured by other reflection, especially in non-optimal lighting conditions. This may prevent the detection of the reference object or make the measurement of the reference length in the image less accurate, lessening the precision of the distance measurement.

Finally, there is also a need, in the case of a near-field vision test, to hold the device at arm's length while looking at the screen, and the distance measurement thus cannot be based on a reference object displayed on said screen.

### Summary of the invention

The proposed method aims at resolving the afore-mentioned problems, by providing a robust and precise measurement method of a test distance separating a user from a camera, notably a camera of a smartphone, in conditions of far field or near-field vision.

To this end, the invention relates to a method for measuring a test distance separating a camera from a user in a second position, the method comprising steps of:
- prompting the user to get in a first position relative to the camera, the first position being different from the second position,
- displaying a reference object with a displaying device worn or carried by the user,
- acquiring a first image comprising the reference object and at least one body part of the user with the camera,
- detecting and measuring at least one calibration length from the reference object in the first image and obtaining a calibration distance separating the camera and the reference object in the first position,
- detecting and measuring at least one first reference length relative to the at least one body part of the user in the first image,
- prompting the user to get in the second position,
- acquiring a second image comprising the at least one body part of the user with the camera,
- detecting and measuring at least one second reference length relative to the at least one body part in the second image, and
- obtaining the test distance from the second reference length, first reference length and calibration distance.

Such a method allows for an improved measurement of the distance separating the user from the camera, based on the previously measured calibration length which can be determined with precision in the first position, and using a reference length based on a body part of the user for scaling to other distances.

The camera may be mounted on a smartphone, tablet, or computer, the displaying device being a screen of said smartphone, tablet, or computer.

Such a feature allows to have both the displaying device and the camera installed in a single device, and to have the device implementing the different method steps and prompts to the user, improving efficiency and ease of use.

The first position and/or the second position may comprise the user standing in front of a mirror, the calibration distance and/or the test distance comprising a distance from the reference object or user to the mirror and a distance from the mirror to the camera.

Such a feature allows both a reduction in overall space required to implement the method by splitting the distance in two parts, and further allows the user to have visual feedback on his position during the measurement.

Such a feature also allows the use of a single device comprising both the displaying device and camera.

The method may comprise a step of displaying a testing screen with a scale factor of the testing screen being determined based on the obtained test distance.

Such a feature allows an accurate scaling of the displayed resting screen, for example an optotype, to the distance between the user and the displaying device, thus making the results of the test more accurate.

The steps of acquiring the second image, of detecting and measuring the at least one second reference length and of obtaining the test distance are iterated during the step of displaying the testing screen, the scale factor being continuously updated during the displaying of the testing screen, based on the obtained test distance.

This feature allows for compensating any relative movement between the displaying device and the user during the testing, to maintain an adequate scaling for the whole duration of the test.

The method may comprise a step of prompting the user to adjust the second position if the obtained test distance is outside a predetermined acceptable range for the test distance.

Such a feature allows to use the measured test distance during a testing step to ensure the test is implemented in adequate testing conditions.

The method may comprise steps of:
- prompting the user to get into a third position different form the first position and the second position,
- acquiring a third image comprising the at least one body part of the user with the camera,
- detecting and measuring at least one third reference length relative to the at least one body part in the third image, and
- obtaining a second test distance from the third reference length, first reference length and calibration distance.

Such a feature allows to implement two successive testing steps, for example a near-field vision test and a far-field vision test, using the same measurements of the calibration length and first reference length to determine both testing distances with accuracy.

In the first position, the calibration distance may be between 1 meter and 2 meters.

Such a feature allows for an accurate measurement of the calibration length by reducing the effect of reflection or blurring and by providing a sufficient size of the reference object in the first image for measuring said calibration length over a sufficient number of pixels.

In the second position, the test distance is either one of less than 80 centimeters or more than 3 meters, and wherein, if applicable, the second test distance is the other one of less than 80 centimeters or more than 3 meters.

Such a feature allows to implement the method for measuring accurately the test distance in near-field vision or in far-fiend vision conditions, respectively, while reducing the effects of blurring or reflection as well as the limitations of a low focal length camera on the accuracy of the measurement in such conditions.

The reference object may be displayed on a screen of a smartphone, tablet or computer, and comprises two rectangular shapes, the calibration length measured in the image of the reference object being measured between centers of the rectangular shapes.

Such a feature allows for a definition of the calibration length that is relatively independent of blurring of the image by taking said calibration length between two points of the reference object that are invariant when the lines of the reference object vary in width and brightness, making the measurement less dependent on distortion or partial obscuring of the first image. The at least one body part in the first image and second image comprises at least two eye corners of the user.

The first reference length may be measured in the first image between two external eye corners of the user.

Such features allow for a reference length that does not vary based on movements of the user and is detectable in an image by implementing facial analysis and corner detection algorithms.

The invention also relates to a computer program comprising instructions which, when the program is executed by a processing circuit of an electronic device, cause the electronic device to carry out the method as above.

The invention further relates to a computer-readable storage medium comprising instructions which, when executed by a processing circuit of an electronic device, cause the electronic device to carry out the method as above.

The invention finally relates to an electronic device comprising at least:
- a camera,
- a displaying device, and
- a processing circuit connected to said camera and displaying device and configured to implement the method as above.

### Brief description of the drawings

- Figure 1 is a schematic representation of the steps of a method according to the invention,
- Figure 2 is a schematic representation of an equipment for implementing the method of figure 1,
- Figure 3 is a schematic view of a user implementing the method of figure 1, in a first position,
- Figure 4 is front view of a smartphone displaying a reference object for implementing the method of figure 1,
- Figure 5 is a representation of a measurement of a reference length in an image of a body part of the user,
- Figure 6 is a schematic view of a user implementing the method of figure 1, in a second position, and
- Figure 7 is a schematic view of a user implementing the method of figure 1, in a third position.

### Detailed description of embodiments

A method 100 for measuring a test distance separating a camera from a user is described below.

The method 100 aims at measuring accurately a test distance separating a user and a camera, for example a test distance involved in a vision test performed by the user.

The test distance corresponds to a second position, which is a relative position of the user and an equipment EQ comprising, for example, the camera and a displaying device used in the test, said equipment being, in the second position, separated from the user by the test distance.

The test may be, for example, a near-field vision test, with a test distance of less that 80 centimeters, and/or a far-field vision test, with a test distance of more than 3 meters.

The displaying device may, during this test, display an optotype, for example.

The test may be performed in front of a mirror with the user holding the equipment at eyes level, in which case the test distance is an optical distance, from the user to the mirror and back to the camera and is thus roughly equal to twice the distance separating the user from the mirror.

Alternatively, the test may be performer at arm's length, with the used looking directly at the equipment and the camera pointed directly at the user (for example a frontal camera of a smartphone).

The accuracy of such a test is highly dependent on the test distance, which must be determined with accuracy. In particular, the test is self-implemented by the user, meaning that no professional is assisting the user, for example in a home environment.

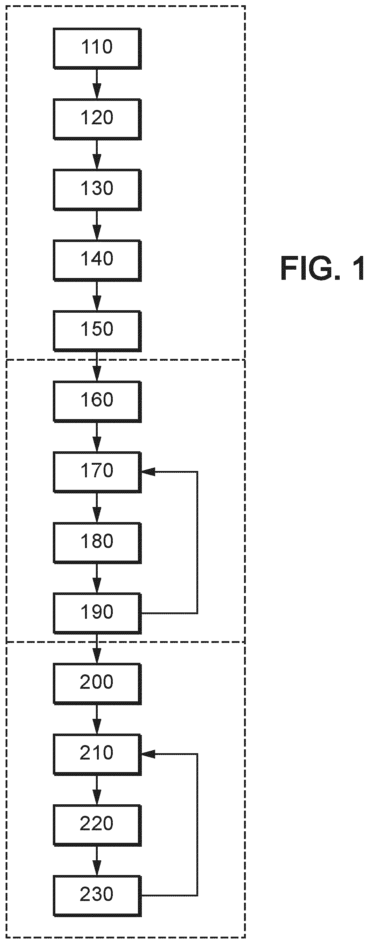

The steps of the method are schematically represented on figure 1.

The method 100 comprises steps of prompting 110 the user to get in a first position, displaying 120 a reference object, acquiring 130 a first image, detecting and measuring 140 at least one calibration length in the first image, detecting and measuring 150 at least one first reference length in the first image, prompting 160 the user to get in the second position, acquiring 170 a second image, detecting and measuring 180 at least one second reference length in the second image and obtaining 190 the test distance.

The method may further comprise steps of prompting 200 the user to get into a third position, acquiring 210 a third image, detecting and measuring 220 at least one third reference length in the third image, and obtaining 230 a second test distance. This is the case where a two-parts test is implemented, for example comprising both a near-field vision test and a far-field vision test, successively.

As shown on figure 1 the steps of acquiring 170 the second image, detecting and measuring 180 the second reference length in the second image and obtaining 190 the test distance may be iterated for a duration of the test.

This is likewise applicable to the steps of acquiring 210 the third image, detecting and measuring 220 the third reference length in the third image, and obtaining 230 the second test distance, during the second test.

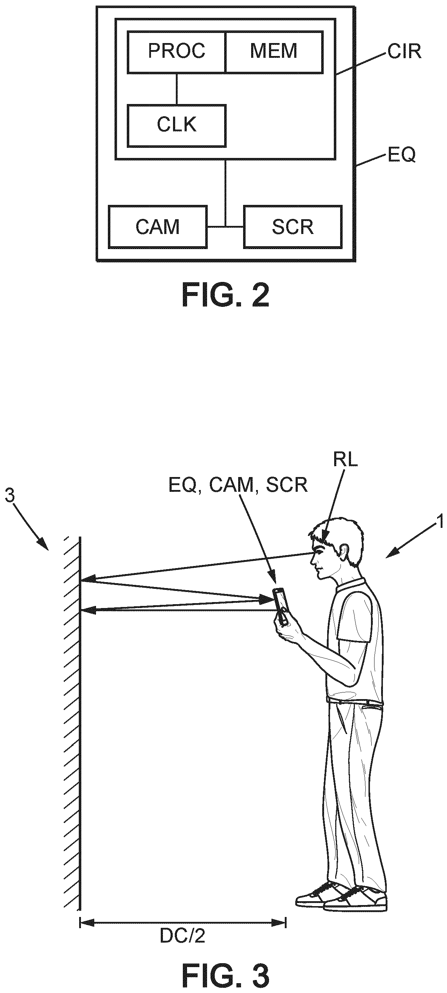

An equipment EQ for implementing the method is shown on figure 2.

The equipment comprises a processing circuit CIR comprising a processor PROC and a memory MEM, the processing circuit being cadenced by a clock CLK.

Information for executing a program implementing steps of the method may be stored on the memory, as well as other data like intermediate distance measurements.

The processing circuit is able to execute said computer program to implement the steps of the method 100 as described above.

The equipment further comprises a camera CAM, which may be internal to the equipment or external to the equipment. The camera is connected to and controlled by the processing circuit.

The equipment may further comprise at least one screen SCR, connected to and controlled by the processing circuit.

The equipment may be a tablet, a computer, or preferably a smartphone.

Figure 3 shows a user 1 performing a first part of the method 100, which aims at measuring a first reference length for further determination of the test distance.

During the step of prompting 110, the user 1 is guided in the first position; in front of a mirror 3 with the equipment EQ held at eyes or chin level, with the displaying device SCR and the camera CAM pointed at the mirror 3.

In the first position, the user 1 is separated from the mirror 3 by a physical distance Dc/2 that is not precisely known, but is indicated to the user as around arm length, thus between 50 cm and 1 meter.

The camera CAM is then separated from the displaying device SCR by an optical distance that is double this physical distance between the user and the mirror, said optical distance being referred to as the calibration distance Dc below.

In the displaying 120 step, the displaying device SCR displays a reference object toward the mirror 3, so that the reference object is in the field of view of the camera CAM.

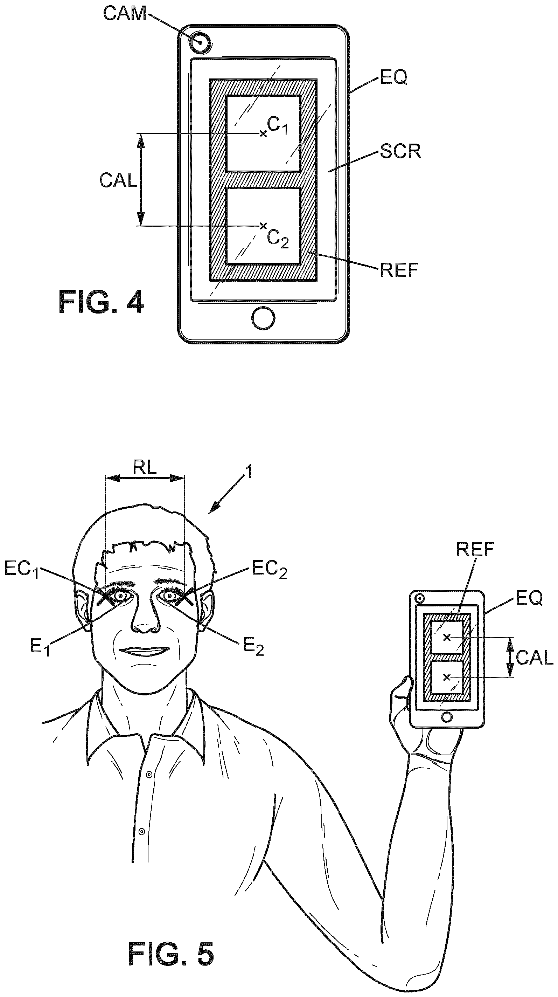

Figure 4 shows the equipment EQ, in this case a smartphone, displaying such a reference object REF on the screen SCR of the smartphone. In this case, the frontal camera of the smartphone is operating as the camera CAM for implementing the method as disclosed.

The reference object REF comprises features allowing to detect at least one calibration length CAL in images of the reference object. The calibration length CAL is known with precision so that any measurement of the calibration length in an image comprising the reference object can be linked to the distance between the reference object and the camera, as explained further in the description.

In a preferred embodiment, the reference object REF is an image of the type disclosed in the application EP4098970, comprising two rectangles or squares, for example in a first grey level, over a field of a different grey level. In this case, the calibration length CAL is preferably measured between the centers C1, C2 of said rectangles or squares in any image comprising the reference object REF.

Alternatively, the reference object may be any other type of displayed image comprising features defining at least one detectable and measurable precisely known calibration length. During the step of acquiring 130 a first image, the camera acquire at least one said first image comprising the reference object as well as at least one predetermined body part of the user.

In a preferred embodiment, shown on figure 5, said predetermined body part comprises both eyes E1, E2 of the user 1, and advantageously the whole face of the user 1.

During the first detecting and measuring 140 step, the at least one calibration length CAL is detected and measured in the first image, from the reference object REF in the first image.

The calibration distance CAL is measured, for example, between the centers of the rectangles or squares of the reference object REF in the first image.

The detection of the reference object in the first image, of the features of said reference object defining the calibration distance, and the measuring of the calibration distance, are implemented by at least one image treatment software, implementing for example a corners detection algorithm.

During the second detecting and measuring 150 step, at least one first reference length RL is detected and measured in the first image, in reference to the at least one predetermined body part of the user 1 in the first image.

As detailed above, the predetermined body part is for example the user's face, the reference length being measured, in the first image, between the external corners EC1, EC2, of the eyes E1, E2 of the user.

Other predetermined body parts and corresponding first reference lengths may be envisioned, such as a length measured between the pupils of the user, for example.

Several examples of image treatment algorithm can be envisioned for the detection of the relevant features of said predetermined body part in the first image to detect and measure the first reference length, such as a machine-learning algorithm.

Examples of machine-learning algorithm implementing such detections have been disclosed, such as a Harris detector *("*A combined corner and edge detection", Harris et al., 1988, Alvey vision conference), a Shi-Tomasi detector (*"*Good features to track", Shi et al., 1994 proceedings of IEEE conference on computer vision and pattern recognition), or a FAST detector (*"*Machine learning for highspeed corner detection", Rosten and Drummond, 2006, European conference on computer, vol. 1). The latter choice may be preferred for faster computing and more robust detection.

As the first image comprises both the calibration length CAL and the first reference length RL, the calibration length being known precisely beforehand, the first reference length RL may also be determined with precision. Furthermore, through a knowledge of the focal length of the camera CAM, obtained for example from data stored on the equipment, the calibration distance DC can also be determined with precision by determining a first scale factor of the first image.

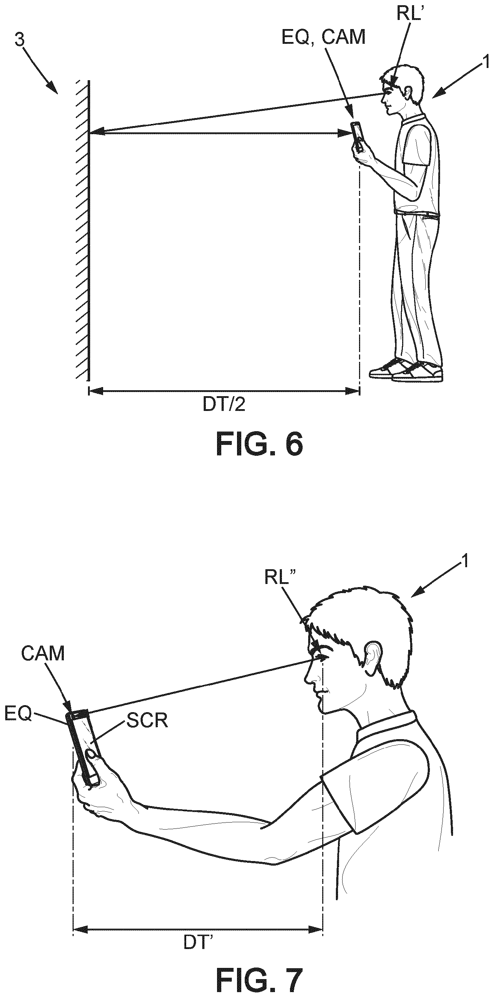

A second part of the method 100 is shown on figure 6, where the user 1 is prompted to get in a second position. The second position is a testing position, where the user is separated form the camera by the testing distance DT, which is an optical distance that the method aims at measuring with precision.

The second position may be a position for a far-field vision test, as shown on figure 6 for example, with an optical distance DT between the user and the camera higher than three meters, and thus a physical distance DT/2 between the user and the mirror higher than 1.5 meters. In this case, the step of prompting 160 the user to get in the second position comprises instructing the user to step back one or two steps from the mirror 3.

During the step of acquiring 170 a second image, the camera CAM acquires said second image with the same predetermined body part of the user comprised in the second image.

During the step of detecting and measuring 180 at least one second reference length RL' in the second image, the second reference length is detected and measured in the second image identically to the detection and measurement of the first reference length RL in the first image. Thus, the second reference length RL' is the same length as the first reference length RL but measured in the second image, with a different scale due to the difference between the calibration distance DC and the test distance DT.

In the disclosed example, the second reference length RL' is measured between the external corners EC1, EC2 of the eyes if the user in the second image.

In the step of obtaining 190 the test distance DT, the test distance DT is calculated based on the first reference length RL, second reference length RL', and from the calibration distance DC, by multiplying the calibration distance DC by the ratio of the second reference length over the first reference length RL'/RL.

Optionally, the method may comprise a step of prompting the user to adjust the second position, if the obtained test distance DT is outside a predetermined acceptable range for the test distance. The predetermined range is for example stored in the memory and based on acceptable conditions for the applicable vision test.

Advantageously, the measured test distance DT is implemented in a testing protocol, which comprises an additional method step of displaying a testing screen SCR on the equipment EQ with a scale factor calculated based on the test distance DT, such as an optotype. Advantageously, the method also comprises an additional step of continuously iterating the steps of measuring the test distance DT during the test protocol, to adjust the scale factor of the displayed testing screen SCR if the test distance DT changes, for example if the user A moves relative to the camera CAM.

In the case of a two parts test, as mentioned above, the method further comprises a step of prompting 200 the user to get into a third position, which is different from the first position and second position. For example, if the second position was a far-field vision test position, ass hon on figure 6, with a distance between the camera and the user higher than 3 meters, the third position is a near-field test position, as shown on figure 7, with a second test distance DT' between the user 1 and the camera CAM less than 80 centimeters.

In this case, the user flips the equipment EQ and holds the equipment at arm length or less, with both the screen SCR and the frontal camera CAM pointing toward the user 1.

The steps of acquiring 210 a third image, detecting and measuring 220 at least one third reference length RL" in the third image, and obtaining 230 a second test distance DT' are identical to the steps described above in relation to the test distance DT in the second position.

The measured calibration distance DC and first reference length RL are used identically in the calculation to determine the second test distance DT', without requiring another calibration between the two parts of the test.

The described method allows for an accurate and robust determination of the test distance separating the user from the camera, in a far-field or near-field vision test conditions, that requires a low computing time, and can be implemented with minimal equipment in a home setup, for example with a smartphone and a mirror only.

## Claims

1. A method (100) for measuring a test distance (DT) separating a camera (CAM) from a user (1) in a second position, the method comprising steps of:
- prompting (110) the user (1) to get in a first position relative to the camera (CAM), the first position being different from the second position,
- displaying (120) a reference object (REF) with a displaying device (SCR) worn or carried by the user,
- acquiring (130) a first image comprising the reference object (REF) and at least one body part (EC1, EC2) of the user with the camera,
- detecting and measuring (140) at least one calibration length (CAL) from the reference object in the first image and obtaining a calibration distance (DC) separating the camera and the reference object (REF) in the first position,
- detecting and measuring (150) at least one first reference length (RL) relative to the at least one body part (EC1, EC2) of the user in the first image,
- prompting (160) the user to get in the second position,
- acquiring (170) a second image comprising the at least one body part (EC1, EC2) of the user with the camera (CAM),
- detecting and measuring (180) at least one second reference length (RL') relative to the at least one body part (EC1, EC2) in the second image, and
- obtaining (190) the test distance (DT) from the second reference length (RL'), first reference length (RL) and calibration distance (DC).

2. The method according to claim 1, wherein the camera (CAM) is mounted on a smartphone (EQ), tablet, or computer, the displaying device (SCR) being a screen of said smartphone, tablet, or computer.

3. The method according to claim 1 or 2, wherein the first position and/or the second position comprise the user (1) standing in front of a mirror (3), the calibration distance (DC) and/or the test distance (DT) comprising a distance from the reference object (REF) or user (1) to the mirror (3) and a distance from the mirror (3) to the camera (CAM).

4. The method according to one of claims 1 to 3, wherein the method comprises a step of displaying a testing screen with a scale factor of the testing screen being determined based on the obtained test distance (DT).

5. The method according to claim 4, wherein the steps of acquiring (170) the second image, of detecting and measuring (180) the at least one second reference length (RL) and of obtaining (190) the test distance (DT) are iterated during the step of displaying the testing screen, the scale factor being continuously updated during the displaying of the testing screen, based on the obtained test distance (DT).

6. The method according to any one of claims 1 to 5, wherein the method comprises a step of prompting the user to adjust the second position if the obtained test distance (DT) is outside a predetermined acceptable range for the test distance.

7. The method according to one of claims 1 to 6, wherein the method comprises steps of:
- prompting (200) the user to get into a third position different form the first position and the second position,
- acquiring (210) a third image comprising the at least one body part (EC1, EC2) of the user (1) with the camera (CAM),
- detecting and measuring (220) at least one third reference length (RL") relative to the at least one body part (EC1, EC2) in the third image, and
- obtaining (230) a second test distance (DT') separating the camera (CAM) from the user (1) in the third position, from the third reference length (RL"), first reference length (RL) and calibration distance (DC).

8. The method according to any one of claims 1 to 7, wherein, in the first position, the calibration distance (DC) is between 1 meter and 2 meters.

9. The method according to any one of claims 1 to 8, wherein, in the second position, the test distance (DT) is either one of less than 80 centimeters or more than 3 meters, and wherein, if applicable, the second test distance (DT") is the other one of less than 80 centimeters or more than 3 meters.

10. The method according to any one of claims 1 to 9, wherein the reference object (REF) is displayed on a screen (SCR) of a smartphone, tablet or computer, and comprises two rectangular shapes, the calibration length measured in the image of the reference object (REF) being measured between centers (C1, C2) of the rectangular shapes.

11. The method according to any one of claims 1 to 10, wherein the at least one body part (EC1, EC2) in the first image and second image comprises at least two eye corners of the user.

12. The method according to claim 11, wherein the first reference length (RL) is measured in the first image between two external eye corners (EC1, EC2) of the user.

13. A computer program comprising instructions which, when the program is executed by a processing circuit (CIR) of an electronic device (EQ), cause the electronic device to carry out the method of any one of claims 1 to 12.

14. A computer-readable storage medium comprising instructions which, when executed by a processing circuit (CIR) of an electronic device, cause the electronic device to carry out the method of any one of the claims 1 to 12.

15. An electronic device (EQ) comprising at least:
- a camera (CAM),
- a displaying device (SCR), and
- a processing circuit (CIR) connected to said camera and displaying device and configured to implement the method according to any one of claims 1 to 12.
